# EUROPÄISCHE PATENTSCHRIFT

(11) **EP 3 029 770 B1**
(45) Veröffentlichungstag und Bekanntmachung des Hinweises auf die Patenterteilung: **25.12.2019**
(21) Anmeldenummer: 16152027.5
(22) Anmeldetag: 23.07.2010
(51) Int. Cl.: H01Q 1/42, H01Q 19/06, H01Q 21/06, G01F 23/284, H01Q 1/22

(54) **PLANARANTENNE MIT ABDECKUNG**
PLANAR ANTENNA WITH COVER
ANTENNE PLANAIRE DOTÉE D'UN RECOUVREMENT

(43) Veröffentlichungstag der Anmeldung: 08.06.2016
(62) Teilanmeldung aus: 10007669.4
(73) Patentinhaber: VEGA Grieshaber KG, 77709 Wolfach (DE)
(72) Erfinder: Schultheiß, Daniel, 78132 Hornberg (DE)
(74) Vertreter: Patentanwälte Bauer Vorberg Kayser

(56) Entgegenhaltungen:
- EP-A1- 2 083 479
- EP-A2- 0 149 400
- EP-A2- 0 301 580
- EP-A2- 0 858 126
- WO-A1-03/085365
- DE-A1-102005 002 505
- US-A- 4 888 597
- US-A1- 2003 151 560
- US-A1- 2007 252 768
- US-A1- 2009 066 590
- US-A1- 2009 251 375
- SPENCER D G: "NOVEL MILLIMETER ACC ANTENNA FEED", IEE COLLOQUIUM ON ANTENNAS FOR AUTOMOTIVES, IEE, LONDON, GB, 10. März 2000 (2000-03-10), Seiten 411-419, XP002160302,

## Beschreibung

Die Erfindung betrifft eine Planarantenne für ein Füllstandradar oder eine Mikrowellenschranke gemäß Oberbegriff des Patentanspruchs 1.

Aus der DE 198 00 306 A1 ist eine Planarantenne für ein Füllstandradar bekannt, bei dem mittels auf einem Substrat angeordneten planaren Strahlerelementen (Patch-Antennen) am stirnseitigen Ende eine Hohlleiters eine axiale HF-Einkopplung erfolgt.

In der Füllstandstechnik gibt es Anwendungen, bei denen eine hohe Temperatur oder ein hoher Druck auftreten kann und die Planarantenne auch einer chemisch aggressiven Atmosphäre ausgesetzt sein kann.

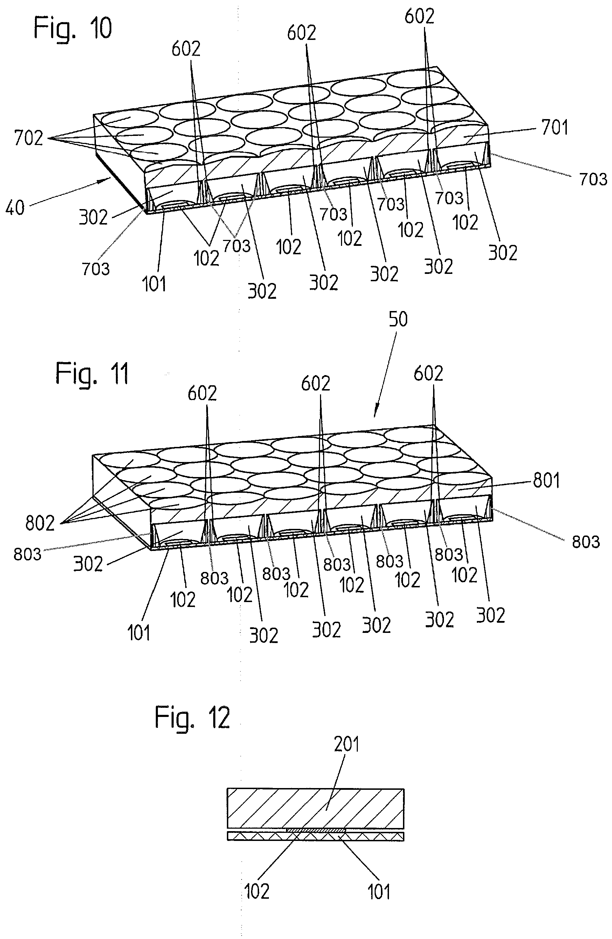

Daher werden im Stand der Technik die auf einem Substrat angeordneten planaren Strahlerelemente mit einer Scheibe aus Keramik oder PTFE (Polytetrafluorethylen, bspw. Teflon) abgedeckt, um insbesondere eine ausreichende chemische Beständigkeit zu erreichen. Eine solche Planarantenne ist schematisch in Figur 12 dargestellt. Hiernach ist auf einer Leiterplatte 101 als Substrat ein planares Strahlerelement 102 angeordnet und wird von einer PTFE-Abdeckung 201 flächenbündig abgedeckt. Hierdurch werden jedoch die HF-Eigenschaften der einzelnen planaren Strahlerelemente stark negativ beeinflusst, insbesondere steht nur eine geringe Bandbreite zur Verfügung. Ferner hat die Abdeckung auch einen großen Einfluss auf die Patch-Geometrie.

Planarantennen mit einem Strahlerelement und einer Abdeckplatte sind zum Beispiel aus US 2009/0066590 A1 bekannt.

Um die HF-Eigenschaften der Antenne und die chemische Beständigkeit zu verbessern, schlägt die WO 2007/124860 A1 vor, ein planares Strahlerelement direkt auf der Rückseite einer solchen Abdeckung, die den Bereich außerhalb der Planarantenne von dem Bereich innerhalb derselben im Sinne einer Prozesstrennung trennt, aufzubringen, wobei eine solche Abdeckung aus Keramik oder Glas hergestellt wird. Durch diese Anordnung des Strahlerelements im Inneren der Antenne kann eine hohe Abdichtung gegenüber der Umgebung, also der Prozessumgebung erzielt werden. Nachteilig ist jedoch die Verwendung von Keramik oder Glas, da diese zu hohen Kosten in der Herstellung führt, insbesondere hinsichtlich der Montage und der erforderlichen Dichtungsmaßnahmen.

Schließlich ist es auch bekannt, die Abdeckung mit einem Abstand von einer halben Wellenlänge der Mikrowellen oder einem Vielfachen hiervon vor dem planaren Strahlerelement anzuordnen. Dies führt jedoch dazu, dass die Druckbelastbarkeit sehr stark abnimmt und daher wieder in nachteiliger Weise auf härtere und druckstabilere Materialien wie Glas oder Keramik zurückgegriffen werden muss, so dass, wie oben bereits ausgeführt, die Herstellungskosten einer solchen Planarantenne erheblich ansteigen.

Die Aufgabe der Erfindung besteht darin, eine der eingangs genannten Art Planarantenne anzugeben, die einen einfachen Aufbau aufweist und damit einfach herstellbar ist, ohne die oben genannten Nachteile aufzuweisen. Insbesondere soll eine solche Planarantenne einem hohen Prozessdruck standhalten können.

Diese Aufgabe wird gelöst durch eine Planarantenne mit den Merkmalen des Patentanspruchs 1.

Eine solche Planarantenne für ein Füllstandradar oder eine Mikrowellenschranke, die mehrere auf einem Substrat angeordnete planare Strahlerelemente und eine Abdeckplatte aus einem Dielektrikum zur Abdeckung der planaren Strahlerelemente umfasst, ist erfindungsgemäß vorgesehen, dass die Abdeckplatte im Bereich der planaren Strahlerelemente Hohlräume aufweist, in denen die von den planaren Strahlerelementen erzeugten Mikrowellen eingekoppelt werden, zur Abstützung von auf die Abdeckplatte wirkenden Druckkräften die Abdeckplatte zumindest im Randbereich der Hohlräume flächenbündig auf dem Substrat aufliegt, die in der Abdeckplatte vorgesehenen Hohlräume entsprechend der Anordnung der Strahlerelemente unter Ausbildung einer zwischen den Hohlräumen sich erstreckenden stegförmigen Struktur angeordnet sind.

Durch diese Hohlräume in der Abdeckplatte können die planaren Strahlerelemente derart ausgebildet und optimiert werden, als würden sie die erzeugten Mikrowellen direkt in Luft abstrahlen. Damit wird eine höhere Bandbreite erzielt.

Die Abstützung der Abdeckplatte auf dem Substrat, und zwar über den Randbereich der Hohlräume, der sich bei mehreren vorgesehenen Hohlräumen zwischen diesen stegförmig ausbildet, führt zu einer Erhöhung der Druckbelastung, da über die zwischen den Hohlräumen sich ausbildende Stege die Druckkräfte auf das Substrat abgeleitet werden.

Eine solche bspw. aus Kunststoff hergestellte Abdeckplatte kann mittels eines Spritzgussverfahrens einfach hergestellt werden.

Gemäß einer vorteilhaften Weiterbildung der Erfindung weist die Abdeckplatte im Bereich des Hohlraums in orthogonaler Richtung hinsichtlich des Substrats eine Dicke auf, die der halben Wellenlänge oder dem ganzzahligen Vielfachen der halben Wellenlänge der erzeugten Mikrowellen entspricht. Dadurch ergibt sich ein Übergang aus dem Hohlraum in die Umgebung der erfindungsgemäßen Planarantenne, der eine maximale Reflexionsdämpfung und eine minimale Durchgangsdämpfung aufweist.

In einer weiteren Ausgestaltung der Erfindung weist die Abdeckplatte im Bereich der Hohlräume eine dielektrische Einrichtung zur Strahlformung der von den planaren Strahlerelementen erzeugten Mikrowellen auf. Vorzugsweise ist diese dielektrische Einrichtung als Linse derart ausgebildet, dass in Abstrahlrichtung der Mikrowellen die Oberfläche der Abdeckplatte entweder konvex oder konkav ausgebildet ist. Mit einer solchen dielektrischen Linse kann für das Strahlerelement die Abstrahlcharakteristik verbessert werden. Zusätzlich wird der Effekt erzielt, dass auf der Oberfläche der Abdeckplatte entstehendes Kondensat an den Spitzen bzw. Rändern der Linse besser abtropfen kann und daher ein solches Kondensat keine Reflexionen bzw. Dämpfungen im Strahlengang der Mikrowellen erzeugen kann. Reflexionen an dieser Stelle würden zu einem erhöhten "Antennenklingeln" führen, das die Empfindlichkeit des Füllstandsensors im Nahbereich verringert und somit eine Messung früher ausfallen könnte. Somit würde eine Dämpfung an dieser Stelle die Empfindlichkeit über den gesamten Messbereich hinweg reduzieren.

In einer besonders vorteilhaften Ausgestaltung der Erfindung ist der Hohlraum als Antennenhorn zur Bildung einer Hornantenne ausgebildet, wobei vorzugsweise die innere Oberfläche des Antennenhorns leitfähig, insbesondere mit einer Metallisierung ausgebildet ist. Damit wird zusätzlich eine Bündelung der Strahlung des planaren Strahlerelements und eine Reduzierung der Nebenzipfel (Nebenkeulen) der Abstrahlcharakteristik der Planarantenne erzielt.

Die Herstellung einer solchen Hornantenne in dem Hohlraum wird besonders einfach, wenn gemäß einer Weiterbildung der Erfindung ein Hornantenneneinsatz verwendet wird, der zur Bildung des Antennenhorns in den jeweiligen Hohlraum eingesetzt wird. Vorzugsweise kann ein solcher Hornantenneneinsatz aus metallisiertem Kunststoff oder vollständig aus Metall hergestellt werden.

Bei Verwendung eines Arrays aus planaren Strahlerelementen wird eine bessere Entkopplung der einzelnen Strahlerelemente durch die Ausgestaltung des jeweiligen zugehörigen Hohlraums als Antennenhorn erreicht.

In einer weiteren Ausgestaltung der Erfindung werden die Hohlräume jeweils als Kreiszylinder oder als Zylinder mit einem Vieleck als Grundfläche ausgebildet.

Weiterhin ist es gemäß einer Weiterbildung der Erfindung besonders vorteilhaft, auf dem Substrat eine regelmäßige Anordnung von planaren Strahlerelementen vorzusehen und die in der Abdeckplatte vorgesehenen Hohlräume entsprechend der regelmäßigen Anordnung der Strahlerelemente anzuordnen.

Schließlich ist es gemäß einer Ausgestaltung der Erfindung vorgesehen, die Abdeckplatte aus Polytetrafluorethylen (PTFE), Polypropylen (PP) oder Polyetheretherketon (PEEK) herzustellen, wodurch eine hohe chemische Beständigkeit erreicht wird. Außerdem sind diese Materialen mittels eines Spritzgussverfahrens einfach zu bearbeiten, so dass diese Abdeckplatte mit den erfindungsgemäßen Hohlräumen kostengünstig hergestellt werden kann.

Die Herstellung der Abdeckplatte aus Aluminium-Keramik (Al2O3) führt ebenso zu einer hohen chemischen Beständigkeit und zusätzlich zu einer hohen mechanischen Belastbarkeit.

Die Erfindung wird nachfolgend anhand von Ausführungsbeispielen unter Bezugnahme auf die beigefügten Figuren ausführlich beschrieben. Es zeigen:
- Figur 1: eine perspektivische Schnittdarstellung einer erfindungsgemäßen Planarantenne als erstes Ausführungsbeispiel,
- Figur 2: eine perspektivische Darstellung des Antennenarrays der Planarantenne nach Figur 1,
- Figur 3: eine perspektivische Darstellung der Abdeckplatte der Planarantenne nach Figur 1 in einer Sicht auf die Unterseite,
- Figur 4: eine Schnittdarstellung eines einzelnen Strahlerelements der Planarantenne nach Figur 1,
- Figur 5: eine perspektivische Schnittdarstellung einer erfindungsgemäßen Planarantenne mit konvexen dielektrischen Linsen als zweites Ausführungsbeispiel,
- Figur 6: eine Schnittdarstellung eines einzelnen Strahlerelements der Planarantenne nach Figur 5,
- Figur 7: eine Schnittdarstellung eines einzelnen Strahlerelements einer Planarantenne mit einer konkaven dielektrischen Linse,
- Figur 8: als drittes Ausführungsbeispiel eine perspektivische Schnittdarstellung einer erfindungsgemäßen Planarantenne, deren Hohlräume mit jeweils einem Antennenhorn ausgebildet ist,
- Figur 9: eine Schnittdarstellung eines einzelnen Strahlerelements der Planarantenne nach Figur 8,
- Figur 10: als viertes Ausführungsbeispiel eine perspektivische Schnittdarstellung einer erfindungsgemäßen Planarantenne nach Figur 8, deren Abdeckplatte konvexe Linsen aufweist,
- Figur 11: als fünftes Ausführungsbeispiel eine perspektivische Schnittdarstellung einer erfindungsgemäßen Planarantenne nach Figur 8, deren Abdeckplatte konkave Linsen aufweist,
- Figur 12: eine Schnittdarstellung einer Planarantenne gemäß Stand der Technik,
- Figur 13: Antennendiagramme eines erfindungsgemäßen planaren Strahlerelements und vergleichsweise eines planaren Strahlerelements gemäß Stand der Technik, und
- Figur 14: Antennendiagramme einer erfindungsgemäßen Planarantenne mit mehreren planaren Strahlerelementen und vergleichsweise einer Planarantenne gemäß Stand der Technik.

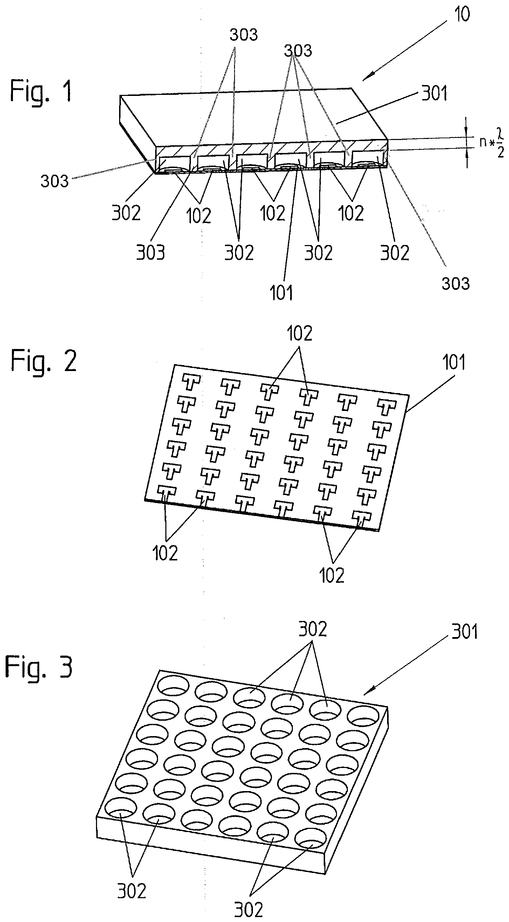

Gleiche oder gleichwirkende Teile in den Figuren 1 bis 12 sind mit identischen Bezugszeichen versehen.

Ein erstes Ausführungsbeispiel zeigen die Figuren 1 bis 4 in unterschiedlichen Darstellungen. Die Planarantenne 10 gemäß Figur 1 umfasst ein Substrat 101, das gemäß Figur 2 mehrere Reihen regelmäßig angeordneter planaren Strahlerelemente (Patch-Antennen) 102 aufweist, sowie eine Abdeckplatte 301, deren Unterseite entsprechend der Darstellung nach Figur 3 kreiszylinderförmige Hohlräume 302 für die einzelnen Strahlerelemente 102 aufweist, so dass jedes einzelne Strahlerelement 102 in einem Hohlraum 302 liegt, wie dies aus Figur 1 zu erkennen ist.

Der zwischen den Hohlräumen 302 liegenden Bereich 303 weist eine stegartige Struktur auf und liegt gemäß Figur 3 flächenbündig auf dem Substrat 101, so dass dadurch eine Abstützung der auf die Abdeckplatte 301 wirkenden Druckkräfte erfolgt, wobei das Substrat 101 seinerseits sich gegen eine dahinter angeordnete Platte oder einen Flansch 304 abstützen kann.

In den nachfolgend beschriebenen Ausführungsbeispielen wurde in den zugehörigen Figuren der Einfachheit halber auf die Darstellung einer solchen Platte 304 bzw. eines solchen Flansches 304 verzichtet.

Die im Bereich der Hohlräume 302 verbleibende Dicke der Abdeckplatte 301 beträgt in der Darstellung gemäß Figur 1 eine halbe Wellenlänge der von den Strahlerelementen 102 erzeugten Mikrowellen oder ein Vielfaches hiervon.

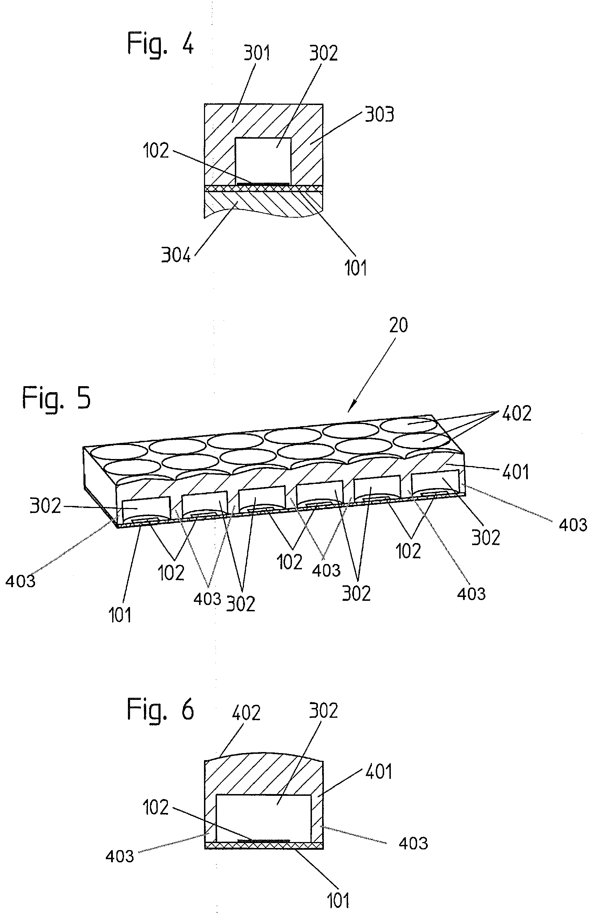

Das zweite Ausführungsbeispiel einer Planarantenne 20 nach Figur 5 ist entsprechend derjenigen nach Figur 1 aufgebaut, umfasst jedoch im Unterschied zu jener eine Abdeckplatte 401, deren Oberfläche jeweils im Bereich der Hohlräume 302 konvexe Erhebungen aufweist, so dass, wie insbesondere aus Figur 6 ersichtlich ist, diese konvexe Erhebungen für jedes Strahlerelement 102 als dielektrische Linse 402 zur Verbesserung von deren Abstrahlcharakteristik dient. Auch bei diesem Ausführungsbeispiel gemäß den Figuren 5 und 6 ist der zwischen den Hohlräumen 302 sich ausbildende Teil 403 der Abdeckplatte 401 stegartig ausgebildet, damit sich die Abdeckplatte 401 über diesen stegförmigen Teil 403 auf dem Substrat 101 abstützen kann.

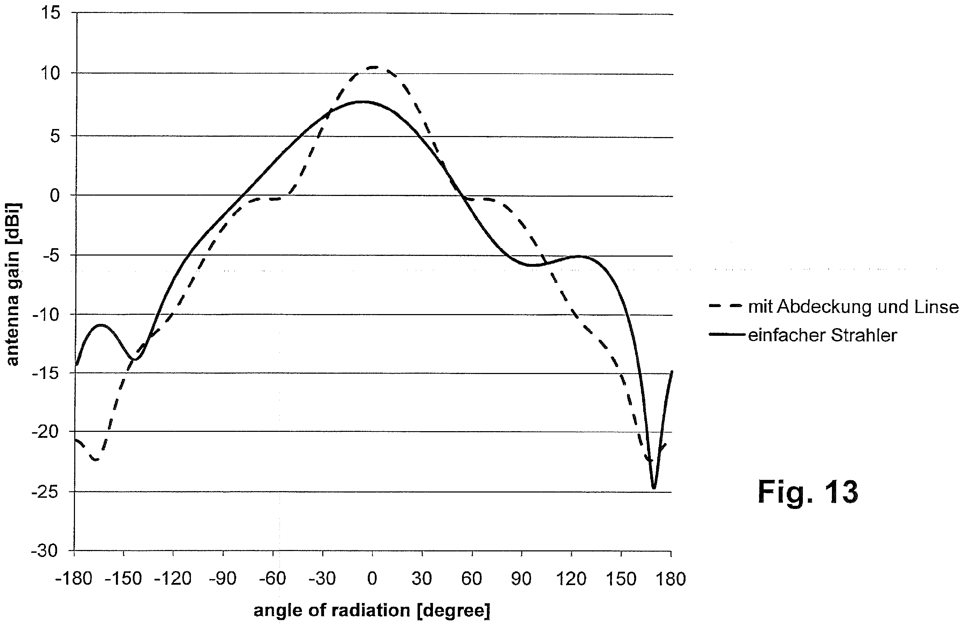

Das Diagramm nach Figur 13 zeigt ein mit einem 3D-Feldsimulationsgrogramm bei 24 GHz erstelltes mit gestrichelter Line dargestellte Antennen-Richtdiagramm eines gemäß Figur 6 aufgebauten einzelnen Strahlerelements 102 im Vergleich zu einem mit durchgezogener Linie dargestellten Antennen-Richtdiagramm eines planaren Strahlerelements gemäß Stand der Technik. Hieraus ist zu erkennen, dass das Antennen-Richtdiagramm des erfindungsgemäßen planaren Strahlerelements 102 einen um ca. 3 dB ansteigenden Antennengewinn gegenüber dem Antennen-Richtdiagramm des Strahlerelements gemäß Stand der Technik zeigt und ferner die Nebenzipfel bezogen auf die Hauptabstrahlung reduziert sind.

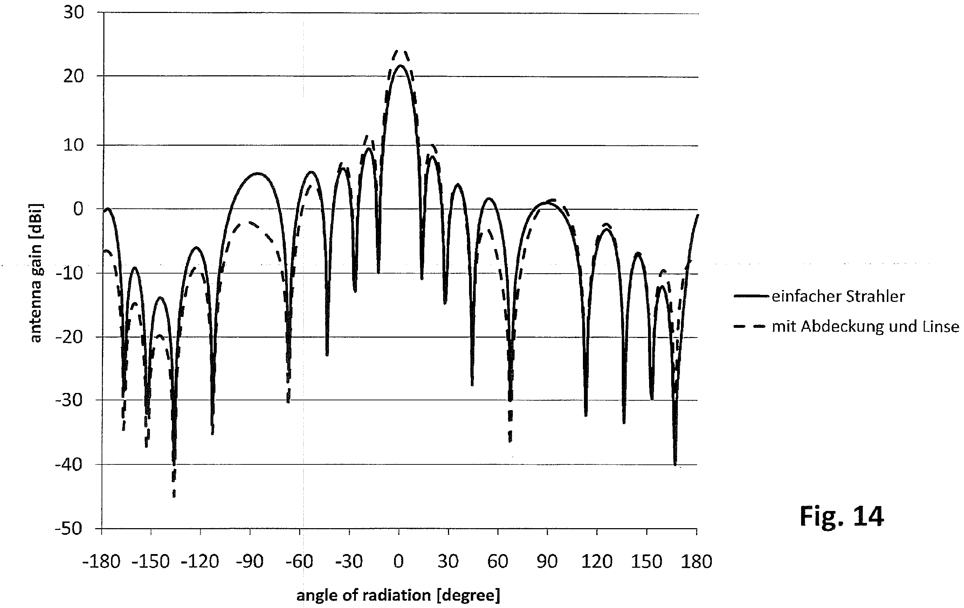

Auch die Simulation mit einer erfindungsgemäßen Planarantenne 20 gemäß Figur 5 mit einem Array von 5x5 Strahlerelementen 102 führt im Vergleich zu einer entsprechenden Planarantenne gemäß Stand der Technik ebenso zu besseren Ergebnissen, wie das Diagramm nach Figur 14 zeigt. So zeigt das mit gestrichelter Linie dargestellte Antennen-Richtdiagramm der erfindungsgemäßen Planarantenne 20 gegenüber dem mit durchgezogener Linie dargestellten Antennen-Richtdiagramm der Planarantenne gemäß Stand der Technik ebenso einen um ca. 3 dB erhöhten Antennengewinn, wobei auch die Nebenzipfel relativ zur Hauptkeule um 2 bis 10 dB des Antennen-Richtdiagramms K1 kleiner sind als bei dem Antennen-Richtdiagramm K2.

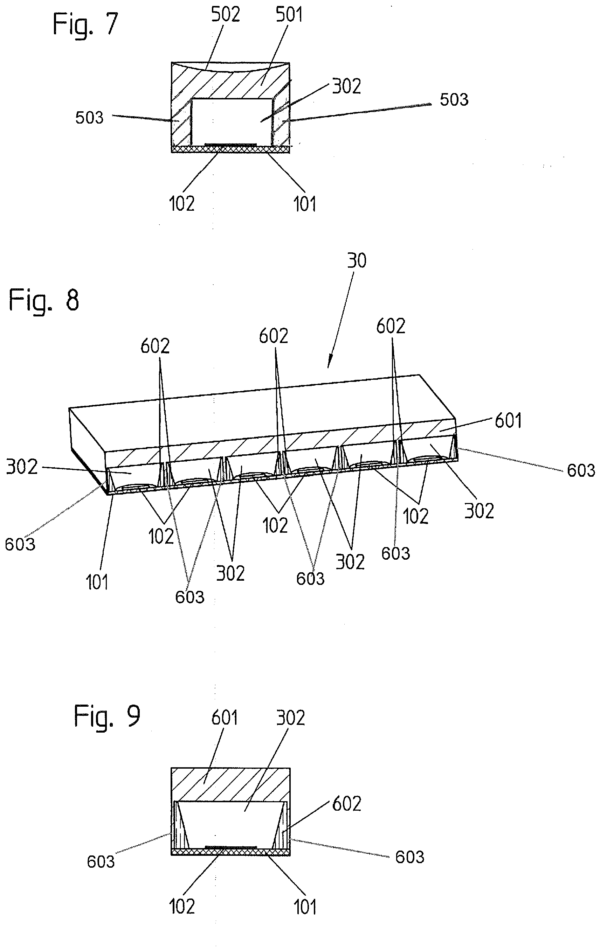

Die Abdeckplatte 401 gemäß Figur 5 kann auch mit dielektrischen Linsen mit einer konkaven Form ausgebildet werden, wie in Figur 7 dargestellt ist. In dieser Figur 7 ist eine Abdeckplatte 501 im Bereich eines einzelnen Strahlerelements 102 gezeigt, deren Oberfläche im Bereich des Hohlraums 302 konkav eingedellt ist und damit für dieses Strahlerelement 102 als dielektrische Linse 502 ebenso zur Verbesserung von deren Abstrahlcharakteristik dient. Die Abdeckplatte 501 stützt sich wieder mit der zwischen den Hohlräumen 302 erstreckenden stegförmigen Struktur 503 auf dem Substrat bzw. der Leiterplatte 101 ab.

Das dritte Ausführungsbeispiel einer erfindungsgemäßen Planarantenne 30 gemäß Figur 8 und Figur 9 entspricht im Aufbau wieder derjenigen nach Figur 1, deren Abdeckplatte 601 weist jedoch Hohlräume 302 auf, die jeweils als Antennenhorn 602 ausgebildet sind, so dass zusammen mit dem jeweiligen Strahlerelement 102 die Wirkung einer Hornantenne entsteht. Auch diese Abdeckplatte 601 stützt sich mit der zwischen den Hohlräumen 302 erstreckenden stegförmigen Struktur 603 auf dem Substrat 101 bzw. der Leiterplatte 101 ab.

Dieses Antennenhorn wird mittels eines in den Hohlraum 302 einführbaren Hornantenneneinsatzes 602 gebildet, das eine leitfähige Oberfläche aufweist. Hierzu wird dieser Hornantenneneinsatzes 602 entweder aus Metall oder einem metallisierten Kunststoff hergestellt. Um einen Hohlraum 302 zu erhalten, dessen Größe demjenigen der Planarantenne nach Figur 1 entspricht, ist der Durchmesser jedes Hohlraums 302 der Abdeckplatte 601 größer gewählt als der Durchmesser des Hohlraums 302 der Abdeckplatte 301 gemäß Figur 1.

Mit einer solchen Ausbildung der Hohlräume 302 zu einem Antennenhorn erfolgt eine zusätzliche Bündelung der einzelnen Strahlerelemente. Ferner wird neben reduzierten Nebenzipfel (Nebenkeulen) in der Antennencharakteristik der Planarantenne 30 auch eine bessere Entkopplung der einzelnen Strahlerelemente 102 durch die Verwendung sogenannter "kleiner Hornantennen" in den Hohlräumen 302 erzielt.

Das vierte Ausführungsbeispiel einer Planarantenne 40 nach Figur 10 ist entsprechend der Planarantenne 30 gemäß Figur 8 mit jeweils als Antennenhorn ausgebildeten Hohlräumen 302 aufgebaut, jedoch mit dem Unterschied, dass die Oberfläche der Abdeckplatte 701 im Bereich der Hohlräume 302 konvexe Erhebungen aufweist, die entsprechend der Abdeckplatte 401 der Planarantenne 20 (Figur 5) als dielektrische Linse 702 für die von dem Strahlerelement 102 erzeugten Mikrowellenstrahlung dient. Die der Abstützung der Abdeckplatte 701 zwischen den Hohlräumen 302 verlaufenden stegförmigen Struktur ist mit dem Bezugszeichen 703 bezeichnet.

Das fünfte und letzte Ausführungsbeispiel einer Planarantenne 50 entspricht der Planarantenne 40 gemäß Figur 10, jedoch mit dem Unterschied, dass die Oberfläche der Abdeckplatte 801 konkave Erhebungen im Bereich der Hohlräume 302 aufweist, die für die von den Strahlerelementen 102 erzeugten Mikrowellenstrahlung als dielektrische Linsen 802 mit konkaver Oberfläche wirken. Die zwischen den Hohlräumen 302 verlaufende stegförmige Struktur 803 dient wieder der Abstützung der Abdeckplatte 801 auf dem Substrat 101.

Die in den erfindungsgemäßen Abdeckplatten 401, 501, 701 und 801 (Figuren 5, 6, 7, 10 und 11) ausgebildeten dielektrischen Linsen 402, 502, 702 und 802 bewirken nicht nur eine verbesserte Abstrahlcharakteristik, sondern lassen auch ein auf der Oberfläche dieser Abdeckplatten entstehendes Kondensat an den Spitzen bzw. Rändern von solchen Linsen besser abtropfen.

Die erfindungsgemäßen Abdeckplatten 401, 501, 601, 701 und 801 können bspw. aus PTFE (Polytetrafluorethylen, Handelsname Teflon), PP (Polypropylen) oder PEEK (Polyetheretherketon) mittels eines Spritzgussverfahrens in einfacher und daher kostengünstiger Weise hergestellt werden. Auch eine Herstellung solcher Abdeckplatten aus Al₂O₃ (Aluminiumoxid-Keramik) ist möglich, um eine besonders hohe chemische Beständigkeit zu erzielen.

### Bezugszeichenliste

- 10: Planarantenne (erstes Ausführungsbeispiel)

- 20: Planarantenne (zweites Ausführungsbeispiel)

- 30: Planarantenne (drittes Ausführungsbeispiel)

- 40: Planarantenne (viertes Ausführungsbeispiel)

- 50: Planarantenne (fünftes Ausführungsbeispiel)

- 101: Substrat, Leiterplatte
- 102: planares Strahlerelement (Patch-Antenne)

- 201: Abdeckplatte (Stand der Technik)

- 301: Abdeckplatte
- 302: Hohlraum
- 303: abstützendes Teil der Abdeckplatte 301
- 304: Platte

- 401: Abdeckplatte
- 402: dielektrische Linse mit konvexer Form
- 403: abstützendes Teil der Abdeckplatte 401

- 501: Abdeckplatte
- 502: dielektrische Linse mit konkaver Form
- 503: abstützendes Teil der Abdeckplatte 501

- 601: Abdeckplatte
- 602: Hornantenneneinsatz
- 603: abstützendes Teil der Abdeckplatte 601
- 701: Abdeckplatte
- 702: dielektrische Linse mit konvexer Form
- 703: abstützendes Teil der Abdeckplatte 701

- 801: Abdeckplatte
- 802: dielektrische Linse mit konkaver Form
- 803: abstützendes Teil der Abdeckplatte 801

## Patentansprüche

1. Planarantenne (10, 20, 30, 40, 50) für ein Füllstandradar oder eine Mikrowellenschranke, umfassend:
- ein Substrat (101), und
- mehrere auf dem Substrat (101) angeordnete planare Strahlerelemente (102), und
- eine Abdeckplatte (301, 401, 501, 601, 701, 801) aus einem Dielektrikum zur Abdeckung der planaren Strahlerelemente (102),
**dadurch gekennzeichnet, dass**
- die Abdeckplatte (301, 401, 501, 601, 701, 801) im Bereich der planaren Strahlerelemente (102) mehrere Hohlräume (302) aufweist, in denen die von den planaren Strahlerelementen (102) erzeugten Mikrowellen eingekoppelt werden,
- zur Abstützung von auf die Abdeckplatte (301, 401, 501, 601, 701, 801) wirkenden Druckkräften die Abdeckplatte (301, 401, 501, 601, 701, 801) zumindest im Randbereich (303, 403, 503, 603, 703, 803) der Hohlräume (302) flächenbündig auf dem Substrat (101) aufliegt, und
- die in der Abdeckplatte (301, 401, 501, 601, 701, 801) vorgesehenen Hohlräume (302) entsprechend der Anordnung der Strahlerelemente (102) unter Ausbildung einer zwischen den Hohlräumen (302) sich erstreckenden stegförmigen Struktur (303, 403, 503, 603, 703, 803) angeordnet sind.

2. Planarantenne (10, 20, 30, 40, 50) nach Anspruch 1,
**dadurch gekennzeichnet, dass**
in orthogonaler Richtung hinsichtlich des Substrats (101) die Abdeckplatte (301, 401, 501, 601, 701, 801) im Bereich der Hohlräume (302) eine Dicke aufweist, die der halben Wellenlänge oder dem ganzzahligen Vielfachen der halben Wellenlänge der erzeugten Mikrowellen entspricht.

3. Planarantenne (10, 20, 30, 40, 50) nach Anspruch 1 oder 2,
**dadurch gekennzeichnet, dass**
die Abdeckplatte (401, 501, 701, 801) im Bereich über den Hohlräumen (302) eine dielektrische Einrichtung (402, 502, 702, 802) zur Strahlformung der von den planaren Strahlerelementen (102) erzeugten Mikrowellen aufweist.

4. Planarantenne (10, 20, 30, 40, 50) nach Anspruch 3,
**dadurch gekennzeichnet, dass**
die dielektrische Einrichtung (402, 502, 702, 802) als Linse ausgebildet ist.

5. Planarantenne (10, 20, 30, 40, 50) nach Anspruch 4,
**dadurch gekennzeichnet, dass**
zur Bildung der Linse (402, 702) in Abstrahlrichtung der Mikrowellen die Oberfläche der Abdeckplatte (401, 701) konvex ausgebildet ist.

6. Planarantenne (10, 20, 30, 40, 50) nach Anspruch 4,
**dadurch gekennzeichnet, dass**
zur Bildung der Linse (502, 802) in Abstrahlrichtung der Mikrowellen die Oberfläche der Abdeckplatte (501, 801) konkav ausgebildet ist.

7. Planarantenne (10, 20, 30, 40, 50) nach einem der vorhergehenden Ansprüche,
**dadurch gekennzeichnet, dass**
die Hohlräume (302) jeweils als Antennenhorn (602) zur Bildung von Hornantennen ausgebildet sind.

8. Planarantenne (10, 20, 30, 40, 50) nach Anspruch 7
**dadurch gekennzeichnet, dass**
die innere Oberfläche des Antennenhorns (602) leitfähig, insbesondere mit einer Metallisierung ausgebildet ist.

9. Planarantenne (10, 20, 30, 40, 50) nach Anspruch 7,
**dadurch gekennzeichnet, dass**
ein Hornantenneneinsatz (602) vorgesehen ist, der zur Bildung des Antennenhorns in die Hohlräume (302) eingesetzt wird.

10. Planarantenne (10, 20, 30, 40, 50) nach Anspruch 9,
**dadurch gekennzeichnet, dass**
der Hornantenneneinsatz (602) aus metallisiertem Kunststoff oder aus Metall hergestellt ist.

11. Planarantenne (10, 20, 30, 40, 50) nach einem der vorhergehenden Ansprüche,
**dadurch gekennzeichnet, dass**
die Hohlräume (302) als Kreiszylinder ausgebildet sind.

12. Planarantenne (10, 20, 30, 40, 50) nach einem der Ansprüche 1 bis 10,
**dadurch gekennzeichnet, dass**
die Hohlräume (302) als Zylinder mit einem Vieleck als Grundfläche ausgebildet sind.

13. Planarantenne (10, 20, 30, 40, 50) nach einem der vorhergehenden Ansprüche,
**dadurch gekennzeichnet, dass**
- auf dem Substrat (101) eine regelmäßige Anordnung von planaren Strahlerelementen (102) vorgesehen ist, und
- die in der Abdeckplatte (301, 401, 501, 601, 701, 801) vorgesehenen Hohlräume (302) entsprechend der regelmäßigen Anordnung der Strahlerelemente (102) angeordnet sind.

14. Planarantenne (10, 20, 30, 40, 50) nach einem der vorhergehenden Ansprüche,
**dadurch gekennzeichnet, dass** die Abdeckplatte (301, 401, 501, 601, 701, 801) aus Polytetrafluorethylen (PTFE), Polypropylen (PP) oder Polyetheretherketon (PEEK) hergestellt ist.

15. Planarantenne (10, 20, 30, 40, 50) nach einem der Ansprüche 1 bis 13,
**dadurch gekennzeichnet, dass** die Abdeckplatte (301, 401, 501, 601, 701, 801) aus Aluminiumoxid-Keramik (Al₂O₃) hergestellt ist.

## Claims

1. A planar antenna (10, 20, 30, 40, 50) for a filling level radar or a microwave barrier, comprising:
- a substrate (101), and
- several planar radiator elements (102) disposed on the substrate (101), and
- a cover plate (301, 401, 501, 601, 701, 801) consisting of a dielectric for covering the planar radiator elements (102),
**characterized in that**
- the cover plate (301, 401, 501, 601, 701, 801), in the region of the planar radiator elements (102), comprises several cavities (302) into which the microwaves generated by the planar radiator elements (102) are coupled,
- the cover plate (301, 401, 501, 601, 701, 801) rests flush on the substrate (101) at least in the edge region (303, 403, 503, 603, 703, 803) of the cavities (302) in order to provide support against pressing forces acting on the cover plate (301, 401, 501, 601, 701, 801), and
- the cavities (302) provided in the cover plate (301, 401, 501, 601, 701, 801) are arranged in accordance with the arrangement of the radiator elements (102) while forming a web-like structure (303, 403, 503, 603, 703, 803) extending between the cavities (302).

2. The planar antenna (10, 20, 30, 40, 50) according to claim 1,
**characterized in that**
in the region of the cavities (302), the cover plate (301, 401, 501, 601, 701, 801) has a thickness, in the orthogonal direction with respect to the substrate (101), which corresponds to half the wavelength or the integer multiple of half the wavelength of the microwaves generated.

3. The planar antenna (10, 20, 30, 40, 50) according to claim 1 or 2,
**characterized in that**
the cover plate (401, 501, 701, 801), in the region above the cavities (302), comprises a dielectric assembly (402, 502, 702, 802) for shaping the beam of the microwaves generated by the planar radiator elements (102).

4. The planar antenna (10, 20, 30, 40, 50) according to claim 3,
**characterized in that**
the dielectric assembly (402, 502, 702, 802) is configured as a lens.

5. The planar antenna (10, 20, 30, 40, 50) according to claim 4,
**characterized in that**
in order to form the lens (402, 702), the surface of the cover plate (401, 701) is formed in a convex manner in the emitting direction of the microwaves.

6. The planar antenna (10, 20, 30, 40, 50) according to claim 4,
**characterized in that**
in order to form the lens (502, 802), the surface of the cover plate (501, 801) is formed in a concave manner in the emitting direction of the microwaves.

7. The planar antenna (10, 20, 30, 40, 50) according to any one of the preceding claims,
**characterized in that**
the cavities (302) are each configured as an antenna horn (602) for forming horn antennas.

8. The planar antenna (10, 20, 30, 40, 50) according to claim 7,
**characterized in that**
the inner surface of the antenna horn (602) is configured to be conductive, particularly with a metallization.

9. The planar antenna (10, 20, 30, 40, 50) according to claim 7,
**characterized in that**
a horn antenna insert (602) is provided which is inserted into the cavities (302) for forming the antenna horn.

10. The planar antenna (10, 20, 30, 40, 50) according to claim 9,
**characterized in that**
the horn antenna insert (602) is made from metallized plastic or from metal.

11. The planar antenna (10, 20, 30, 40, 50) according to any one of the preceding claims,
**characterized in that**
the cavities (302) are configured as circular cylinders.

12. The planar antenna (10, 20, 30, 40, 50) according to any one of the claims 1 to 10,
**characterized in that**
the cavities (302) are configured as cylinders with a polygon as a base area.

13. The planar antenna (10, 20, 30, 40, 50) according to any one of the preceding claims,
**characterized in that**
- a regular arrangement of planar radiator elements (102) is provided on the substrate (101),
- the cavities (302) provided in the cover plate (301, 401, 501, 601, 701, 801) are arranged in accordance with the regular arrangement of the radiator elements (102).

14. The planar antenna (10, 20, 30, 40, 50) according to any one of the preceding claims,
**characterized in that**
the cover plate (301, 401, 501, 601, 701, 801) is made from polytetrafluoroethylene (PTFE), polypropylene (PP) or polyether ether ketone (PEEK).

15. The planar antenna (10, 20, 30, 40, 50) according to any one of the claims 1 to 13,
**characterized in that**
the cover plate (301, 401, 501, 601, 701, 801) is made from aluminum oxide ceramic material (Al₂O₃).

## Revendications

1. Antenne planaire (10, 20, 30, 40, 50) pour un radar de niveau ou une barrière à micro-ondes, comprenant:
- un substrat (101) et
- une pluralité d'éléments radiateurs planaires (102) disposés sur ledit substrat (101), et
- une plaque de recouvrement (301, 401, 501, 601, 701, 801) en un diélectrique destinée à recouvrir les éléments radiateurs planaires (102),
**caractérisée par le fait que**
- ladite plaque de recouvrement (301, 401, 501, 601, 701, 801) présente une pluralité de cavités (302) au niveau des éléments radiateurs planaires (102), dans lesquelles sont couplées les micro-ondes générées par les éléments radiateurs planaires (102),
- pour supporter des forces de pression agissant sur la plaque de recouvrement (301, 401, 501, 601, 701, 801), la plaque de recouvrement (301, 401, 501, 601, 701, 801) repose à fleur de surface sur le substrat (101) au moins dans la zone marginale (303, 403, 503, 603, 703, 803) des cavités (302), et
- les cavités (302) prévues dans la plaque de recouvrement (301, 401, 501, 601, 701, 801) sont disposées en fonction de l'agencement des éléments radiateurs (102), tout en formant une structure (303, 403, 503, 603, 703, 803) en entretoise s'étendant entre les cavités (302).

2. Antenne planaire (10, 20, 30, 40, 50) selon la revendication 1, **caractérisée par le fait que**, dans la direction orthogonale par rapport au substrat (101), la plaque de recouvrement (301, 401, 501, 601, 701, 801) présente une épaisseur au niveau des cavités (302) qui correspond à la moitié de la longueur d'onde ou au multiple entier de la moitié de la longueur d'onde des micro-ondes générées.

3. Antenne planaire (10, 20, 30, 40, 50) selon la revendication 1 ou 2, **caractérisée par le fait que**, dans la zone située au-dessus des cavités (302), la plaque de recouvrement (401, 501, 701, 801) comprend un dispositif diélectrique (402, 502, 702, 802) pour la mise en forme de faisceau des micro-ondes générées par les éléments radiateurs planaires (102).

4. Antenne planaire (10, 20, 30, 40, 50) selon la revendication 3, **caractérisée par le fait que** le dispositif diélectrique (402, 502, 702, 802) est réalisé en tant que lentille.

5. Antenne planaire (10, 20, 30, 40, 50) selon la revendication 4, **caractérisée par le fait que**, pour former la lentille, la surface de la plaque de recouvrement (401, 701) est réalisée de façon convexe dans la direction d'émission des micro-ondes.

6. Antenne planaire (10, 20, 30, 40, 50) selon la revendication 4, **caractérisée par le fait que**, pour former la lentille, la surface de la plaque de recouvrement (501, 801) est réalisée de façon concave dans la direction d'émission des micro-ondes.

7. Antenne planaire (10, 20, 30, 40, 50) selon l'une quelconque des revendications précédentes, **caractérisée par le fait que** les cavités (302) sont réalisées chacune en tant que cornet d'antenne (602) pour former des antennes à cornet.

8. Antenne planaire (10, 20, 30, 40, 50) selon la revendication 7, **caractérisée par le fait que** la surface intérieure du cornet d'antenne (602) est conductrice, en particulier est réalisée avec une métallisation.

9. Antenne planaire (10, 20, 30, 40, 50) selon la revendication 7, **caractérisée par le fait qu'**un insert d'antenne à cornet (602) est prévu qui est inséré dans les cavités (302) pour former le cornet d'antenne.

10. Antenne planaire (10, 20, 30, 40, 50) selon la revendication 9, **caractérisée par le fait que** l'insert d'antenne à cornet (602) est réalisé à partir d'une matière plastique métallisée ou de métal.

11. Antenne planaire (10, 20, 30, 40, 50) selon l'une quelconque des revendications précédentes, **caractérisée par le fait que** les cavités (302) sont réalisées en tant que cylindres circulaires.

12. Antenne planaire (10, 20, 30, 40, 50) selon l'une quelconque des revendications 1 à 10, **caractérisée par le fait que** les cavités (302) sont réalisées en tant que cylindres ayant un polygone comme surface de base.

13. Antenne planaire (10, 20, 30, 40, 50) selon l'une quelconque des revendications précédentes, **caractérisée par le fait que**
- un agencement régulier d'éléments radiateurs planaires (102) est prévu sur le substrat (101), et
- les cavités (302) prévues dans la plaque de recouvrement (301, 401, 501, 601, 701, 801) sont disposées en fonction de l'agencement régulier des éléments radiateurs (102).

14. Antenne planaire (10, 20, 30, 40, 50) selon l'une quelconque des revendications précédentes, **caractérisée par le fait que** la plaque de recouvrement (301, 401, 501, 601, 701, 801) est réalisée à partir de polytétrafluoroéthylène (PTFE), de polypropylène (PP) ou de polyétheréthercétone (PEEK).

15. Antenne planaire (10, 20, 30, 40, 50) selon l'une quelconque des revendications 1 à 13, **caractérisée par le fait que** la plaque de recouvrement (301, 401, 501, 601, 701, 801) est réalisée à partir de céramique d'oxyde d'aluminium (Al₂O₃).
